Europäisches Patentamt

European Patent Office

Office européen des brevets

(11) Publication number: 0 204 495
A2

## (12) EUROPEAN PATENT APPLICATION

(21) Application number: 86304022.6

(22) Date of filing: 27.05.86

(51) Int. Cl.4: G02B 27/00 , G02B 13/08 , G11B 7/00

(30) Priority: 03.06.85 US 740168

(43) Date of publication of application:
10.12.86 Bulletin 86/50

(84) Designated Contracting States:
DE FR GB

(71) Applicant: XEROX CORPORATION
Xerox Square - 020
Rochester New York 14644(US)

(72) Inventor: Godwin, Jimmy Deane
3369 Walton Way
San José California(US)
Inventor: Eberly, Carlyle Jackson
410 Ositos Avenue
Sunnyvale California(US)

(74) Representative: Weatherald, Keith Baynes et
al
European Patent Attorney Rank Xerox
Limited Patent Department 338 Euston Road
London NW1 3BH(GB)

(54) Astigmatism correction in laser diodes.

(57) Correction of the astigmatism of a diode laser -
(2) beam is achieved by utilizing the inherent nature
of anamorphic optics (8) to produce astigmatism
when decollimated light enters the anamorphic optics, in conjunction with a point diffraction interferometer which provides an observable interference
fringe pattern between a plano transmitted wavefront
and a diffracted spherical reference wavefront. The
shape of the interference fringe pattern movement of
the collimating lens (6) along the optic axis (Z), so
that light entering the anamorphic optics is now
decollimated, permitting the collimating lens to be
positioned at a point where the anamorphic optics
provides a degree of astigmatism that substantially
compensates for the astigmatism of the laser beam.
Since optical disc drives are inherently much more
sensitive to astigmatism errors than to decollimation,
the trade-off in optical quality is acceptable.

FIG. 2

DIVERGING
WAVEFRONTS

B

A

*2*

*6*

OPTIC
AXIS Ξ

*8*

ANAMORPHIC
OPTICS

WAVEFRONTS
A & B

*14*

REFERENCE
BEAM

*20*

*21*

ΔZ

ΔZ = 0

TEST
BEAM

*22*

*12*

0 204 495

1a

The optics modules of commercially-available optical disc drives are typically designed to have collimated light enter the objective lens of the drive. This makes the distance from the collimating lens to the objective lens non-critical. The objective lens can dynamically focus on a non-flat spinning disk without concern for changing the back conjugate and thus the optical performance of the drive.

Beam collimation is easily achieved in conventional laser systems using gas or ion lasers by monitoring divergence based on a Gaussian intensity pattern. The beam from a diode laser, however, has a non-Gaussian intensity pattern. Wavefronts in the axes orthogonal to the optical axis (the Z axis) have different angles of divergence, such that an elliptical light beam is provided upon collimation. Each axis of the elliptical beam requires evaluation based on different scaling parameters. Divergence angles also vary from laser diode to laser diode, which further complicates matters.

In addition to producing a light beam that is of elliptical shape, diode lasers produce a beam that has astigmatism. That is, wavefronts in different axes orthogonal to the optical axis appear to emanate from different points along the optical axis of the laser.

Conventionally, the collimating lens of the optics module of an optical disk drive is located along the optic axis so that its focus corresponds to the emission point of one of the wavefronts, thus providing, after the collimating lens, an elliptically shaped beam having one collimated wavefront and one diverging (or converging) wavefront because of the astigmatism of the diode laser. To correct for the beam ellipticity, conventional optics modules for optical disk drives include anamorphic optics located beyond the collimating lens. The anamorphic optics expand the magnitude of the smaller beam wavefront thereby providing a beam with a circular wavefront but still with astigmatism. To correct for the astigmatism, it is the conventional practice to provide, after the anamorphic optics, a cylindrical lens with power in only the plane of the smaller wavefront. Another approach to astigmatism correction is to utilize only a central portion of the beam which has the least amount of astigmatism, but this greatly reduces beam power.

In accordance with the invention, correction of the astigmatism of a diode laser beam is achieved by utilizing the inherent nature of anamporphic optics to produce astigmatism when decollimated light enters the anamorphic optics in conjunction with a point diffraction interferometer which provides an observable interference fringe pattern between a plane transmitted wavefront and a diffracted spherical reference wavefront. The shape of the interference fringe pattern in relation to movement of the collimating lens along the optic axis, so that light entering the anamorphic optics is now decollimated, permits the collimating lens to be positioned at a point where the anamorphic optics provides a degree of astigmatism that substantially compensates for the astigmatism of the laser beam. Since optical disc drives are inherently much more sensitive to astigmatism errors than to decollimation, the trade-off in optical quality is acceptable.

The present invention will be be described by way of example with reference to the accompanying drawings, in which:

Figure 1 is a schematic diagram of a diode laser optical system of the prior art;

Figure 2 is a schematic diagram of a diode laser astigmatism correction system according to the invention, and

Figure 3 shows light wavefront interaction with a point diffraction interferometer plate.

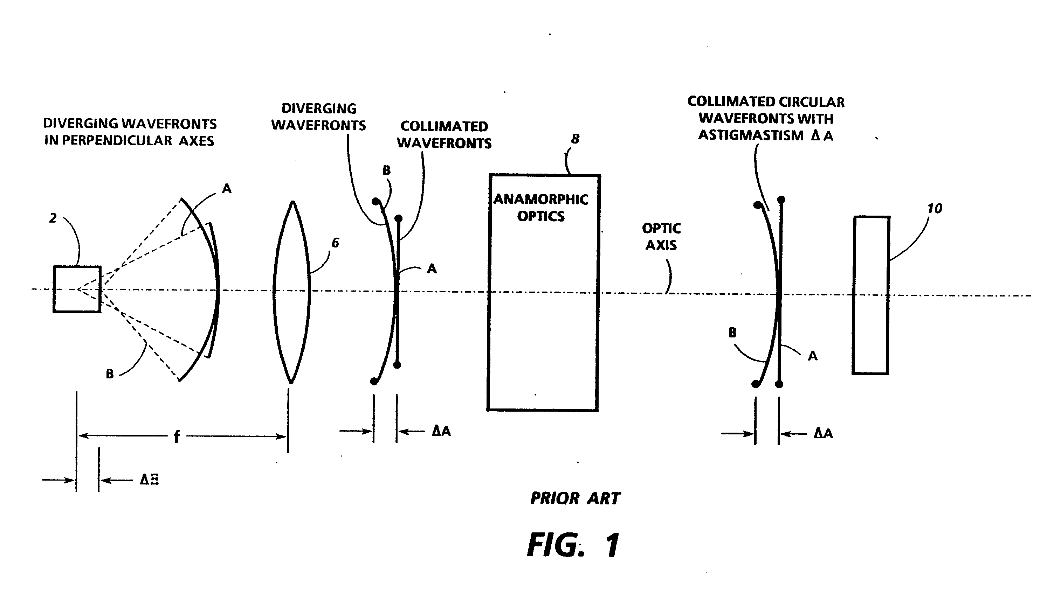

Referring first to Figure 1, there is shown a conventional optics module for an optical disc drive system. The laser diode 2 produces diverging light beam wavefronts A and B in perpendicular axes. Note that the wavefronts A and B appear to emanate from points displaced along the system optic axis Z by $\Delta$ Z, thereby providing a laser astigmatism of $\Delta$ A. A collimating lens 6 with focal length f is placed permanently at the distance f from the emanation point of one of the wavefronts A or B, such as wavefront A as shown. Lens 6 collimates wavefront A but wavefront B is still diverging and laser astigmatism $\Delta$ A is still present. To correct for the inherent ellipticity of beams from a diode laser, anamorphic optics 8 are placed along the axis Z. The anamorphic optics 8 provide a circular beam (as depicted by the equal extent of wavefronts A and B beyond optics 8) but that beam still has laser astigmatism A. A cylindrical lens 10 having power only in one plane is now utilized to correct the beam astigmatism $\Delta$ A.

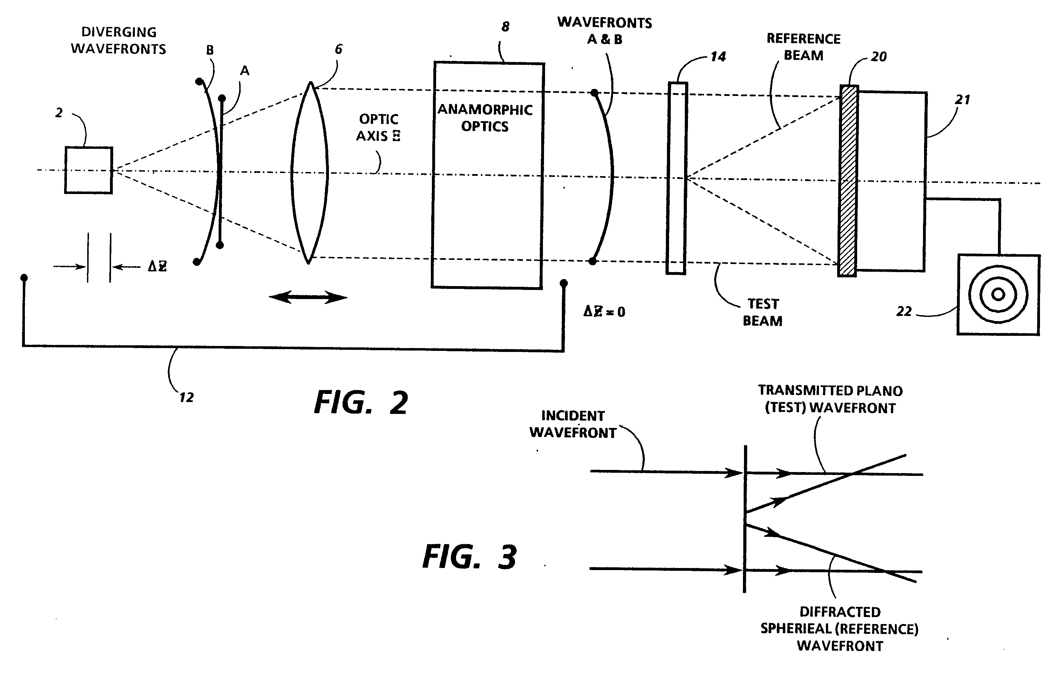

Referring now to the invention and particularly to Figure 2, a laser module 12 is provided that includes laser diode 2, collimating lens 6, and anamorphic optics 8, all located along optic axis Z. Lens 6 is mounted so that it can be moved slightly along axis Z, while diode 2 and anamorphic optics 8 have permanent placement relative to each other along axis Z. As in Figure 1, the anamorphic optics 8 are utilized to correct for laser beam ellipticity. However, now the property of the anamorphic optics 8 to produce astigmatism when decollimated light enters the anamorphic optics is utilized to provide astigmatism tending to cancel the astigmatism of the wavefronts from laser diode 2. The position of collimating lens 6 along axis Z determines the degree of decollimation of light entering the anamorphic optics 8.

Indication that laser astigmatism is cancelled by anamorphic optics induced astigmatism is provided by placement of a point diffraction interferometer 14 beyond the optics module 12 at a testing station. A preferred point diffraction interferometer is a Smartt interferometer comprised, for example, of a neutral density coating on a glass plate with a small opening or pin hole made in the coating. The pin hole is centered along optical axis Z. As shown in Figure 3, when a wavefront with slight decollimation is incident on a point diffraction interferometer of the Smartt type, some light passes through undisturbed, as a plano test wavefront, and some light is diffracted into a spherical reference wavefront. The fringe pattern caused by interference between the reference and test wavefronts is detected at an observation plane 20, which could be the faceplate of a pick-up camera 21, the output of which is displayed on, for example, a cathode ray tube screen monitor 22. The shape of the fringe pattern is indicative of the presence and amount of astigmatism in the beam incident on the interferometer 14. A small deviation in collimation causes substantilly no change in the reference wavefront. As the test wavefront diverges and converges, the interference rings get larger and smaller, respectively. The pin hole of the interference plate is much smaller than the input beam so it does not affect the quality of the interferogram but is of dimension such that it is easy to fabricate and provide equal intensity of the test and reference wavefronts to provide best contrast at the display.

When astigmatism is large, the fringe pattern is highly elliptical, with the direction and magnitude of the major axis indicating the direction and magnitude of the astigmatism. To cure the astigmatism Δ A, the lens 6 is moved along the optic axis Z, with a decrease in ellipticity, as shown on the display 22, indicating correct directional movement of lens 6. When the fringe pattern appears circular, the beam entering the anamorphic optics is sufficiently decollimated such that the anamorphic optics provide astigmatism that directly cancels the astigmatism of the laser (as shown in Figure 2 by wavefronts A and B having Z = O beyond optics 8). The collimating lens 6 is then permanently positioned and the module 12 is removed from the test set up. Thus, it is seen that astigmatism correction is achieved without additional cylindrical optics and with full beam power. The described procedure will provide for correction of inherent diode laser astigmatism at the expense of defocussing of the laser beam. However, this is an acceptable trade off because optical disc drives are designed to be much more sensitive to astigmatism errors than to decollimation. As in the prior art, beam ellipticity is corrected by anamorphic optics 8.

To get enough data to evaluate the wavefronts accurately, but not so much that the interferogram could not be analyzed by the eye, it is desired to have a fringe pattern with approximately three interference rings to evaluate. The number of interference rings is determined by the distance of the interferometer plate 14 from the observation plane - (the distance from the collimating lens 6 to the interferometer plate 14 has a very small effect). Increased separation between the interferometer plate 14 and the observation plane provides fewer rings, this being because of both wavefronts approaching plano approximation.

A particular test setup utilized an interference plate 14 known as a Smartt collimator plate. The neutral density filter of that interferometer was a glass plate coated with a chrome type coating to an optical density of 2.0. That coating had been etched to provide a central pin hole of 340 μm. The interferometer plate was typically placed 20 mm from the anamorphic optics and 800 mm from the observation plane. The pickup camera for this set up was an infrared camera. The diode laser was an HL8312 purchased from Hitachi. The anamorphic optics are of conventional design, consisting, for example, of two Littrow prisms with antireflection coatings.

## Claims

1. A method of correcting the astigmatism of wavefronts of a light beam emitted from a solid state laser (2) to be utilized in a scanning system having an optical axis (Z) along which the beam is projected, said system further including a collimating lens (6) disposed along said optical axis and anamorphic optics (8) disposed along said optical axis beyond said lens, including the step of locating the collimating lens along the optical axis at a position that causes decollimated light to enter the anamorphic optics to produce astigmatism substantially cancelling the astigmatism of the wavefronts of the light beam.

2. A method of providing astigmatism correction for a beam from a solid state laser (2) utilized in a scanning system having an optical axis (Z) along which the beam is projected, the aid system further including a collimating lens (6) disposed along the optical axis and anamorphic optics (8) disposed on the optical axis beyond the lens,

including the steps of:

providing an interferometer plate in the path of the beam beyond the anamorphic optics;

moving the lens along the optical axis, observing the shape of the light interference fringes produced by the plate, and

permanently locating the lens at a position relative to the laser at which the fringes are of a desired shape.

DIVERGING WAVEFRONTS
IN PERPENDICULAR AXES

DIVERGING
WAVEFRONTS

COLLIMATED
WAVEFRONTS

ANAMORPHIC
OPTICS

8

COLLIMATED CIRCULAR
WAVEFRONTS WITH
ASTIGMASTISM Δ A

OPTIC
AXIS

2

A

B

6

B

A

ΔA

10

B

A

ΔA

f

ΔΞ

0 204 495

*PRIOR ART*

# FIG. 1

DIVERGING WAVEFRONTS

OPTIC AXIS

ANAMORPHIC OPTICS

WAVEFRONTS A & B

REFERENCE BEAM

$\Delta Z$

$\Delta Z = 0$

TEST BEAM

**FIG. 2**

INCIDENT WAVEFRONT

TRANSMITTED PLANO (TEST) WAVEFRONT

DIFFRACTED SPHERICAL (REFERENCE) WAVEFRONT

**FIG. 3**

0 204 495